# EUROPÄISCHE PATENTSCHRIFT

(11) **EP 4 008 012 B1**
(45) Veröffentlichungstag und Bekanntmachung des Hinweises auf die Patenterteilung: **30.11.2022**
(21) Anmeldenummer: 20742693.3
(22) Anmeldetag: 15.07.2020
(51) Int. Cl.: G21D 1/00

(54) **VERFAHREN ZUM ERRICHTEN EINER VORRICHTUNG ZUM RÜCKBAU EINER INDUSTRIEANLAGE**
METHOD FOR ERECTING AN APPARATUS FOR DISMANTLING AN INDUSTRIAL PLANT
PROCÉDÉ DE MONTAGE D'UN APPAREIL DE DÉMANTÈLEMENT D'UNE INSTALLATION INDUSTRIELLE

(30) Priorität: 02.08.2019 DE 102019121004
(43) Veröffentlichungstag der Anmeldung: 08.06.2022
(73) Patentinhaber: RWE Nuclear GmbH, 45141 Essen (DE)
(72) Erfinder: BÜSCHER, Tim, 45721 Haltern am See (DE); ALBERT, Jens, 67551 Worms (DE); FREESE, Andreas, 49811 Lingen (Ems) (DE); BRÜGGESTRATH, Stefan, 47906 Kempen (DE)
(74) Vertreter: Keenway Patentanwälte Neumann Heine Taruttis
(86) Internationale Anmeldenummer: PCT/EP2020/070060
(87) Internationale Veröffentlichungsnummer: WO 2021/023491

(56) Entgegenhaltungen:
- EP-A2- 2 833 367
- DE-A1- 2 638 174
- Carsten F. ET AL: "15 years practical decommissioning experiences at Greifswald NPP", CEE Decommissioning & Waste Cooperation, 19. Juni 2008 (2008-06-19), XP055404456, Berlin Gefunden im Internet: URL:www.google.com [gefunden am 2017-09-07]
- D. RITTSCHER ET AL: "Kernkraftwerke Greifswald und Rheinsberg: Stillegung, Abbau und Aufbau", INTERNATIONALE ZEITSCHRIFT F?R KERNENERGIE, Bd. 47, Nr. 4, 1. April 2002 (2002-04-01), Seiten 235-243, XP055402261, ISSN: 1431-1525

## Beschreibung

Die Erfindung betrifft ein Verfahren zum Errichten einer Vorrichtung zum Rückbau einer Industrieanlage mit einer Vielzahl von Abbaustationen für Industrieanlagenelementen, insbesondere einer kerntechnischen Anlage mit entsprechenden kerntechnischen Einrichtungen.

Beim Ab- oder Rückbau von Industrieanlagen oder industriellen Strukturen werden diese abgebaut, bzw. rückgebaut, wobei abgebaute Elemente einer Industrieanlage jeweils soweit als möglich recycelt oder einem Wertstoffkreislauf zugeführt werden, sodass rückgebaute Elemente einer solchen Industrieanlage soweit als möglich nicht final entsorgt, sondern wiederverwendet oder aufbereitet werden können. Im Folgenden wird die Erfindung anhand einer kerntechnischen Anlage beschrieben.

Unter dem Begriff kerntechnische Anlage wird eine technische Einrichtung verstanden, die der Verarbeitung, Verwertung und/oder Lagerung von Kernbrennstoff dient. Insbesondere umfasst der Begriff kerntechnische Anlage ein Kernkraftwerk, Leistungsreaktoren, Prototypreaktoren, Forschungsreaktoren, Anlagen zur Nuklid-Anreicherung, Anlagen zur Herstellung und/oder Aufbereitung von Kernbrennstoff, Brennelementefabriken, Wiederaufbereitungsanlagen, Zwischenlager und ähnliches. Besonders bevorzugt wird unter dem Begriff kerntechnische Anlage ein Kernkraftwerk und/oder ein Kernspaltungsreaktor verstanden. Im Vergleich zum Rückbau einer nicht-kerntechnischen Anlage, bei der typischerweise keine erhöhte Radioaktivität oder Strahlenbelastung zu erwarten ist, tritt beim Rückbau einer solchen kerntechnischen Anlage eben das zusätzliche Problem auf, dass Anlagenelemente radioaktiv strahlen, d.h. "aktiviert" sind, oder kontaminiert sein können und daher entsprechende besondere Schutzvorkehrungen zu treffen und Schutzvorschriften einzuhalten sind. Wenngleich bei einer solchen kerntechnischen Anlage im Vergleich zu anderen, nicht-kerntechnischen Anlagen besondere Vorschriften einzuhalten sind, so kann das nachfolgend beschriebene Verfahren auch auf andere Industrieanlagen angewendet werden.

Der Rückbau einer kerntechnischen Anlage ist aus der DE26 38 174 A1 bekannt. Diese beschreibt ein Verfahren zum Rückbau eines Kernkraftwerks, bei dem Hilfs- und Behandlungssysteme, die ohnehin in dem Kernkraftwerk vorhanden sind, während des Rückbaus weiterverwendet werden. Zusätzlich notwendige Behandlungssysteme, die nur für den Rückbau erforderlich sind, werden in Containern platziert, die in einem bunkerähnlichen Gebäude und mit Anschluss an das Reaktorgebäude platziert sind. Ein alternatives Vorgehen offenbart das Dokument Carsten F. et al.:" 15 years practical decommissioning experiences at Greifswald NPP"; CEE Decommissioning & Waste Cooperation, 19. Juni 2008 (2008-06-19), XP055404456, Berlin.

Die EP2 833 367 A2 offenbart eine Anlage und ein Verfahren zur Bearbeitung von Reststoffen, insbesondere von aktivierten oder kontaminierten und/oder nicht kontaminierten Reststoffen, wobei die Reststoffe oder Abfälle einer Wiederverwertung zugeführt werden können und Reststoffe oder Abfälle einer kerntechnischen Anlage entstammen. Die beschriebene Anlage ist dabei so gestaltet, dass diese nicht nur für ein einzelnes rückzubauendes Kernkraftwerk errichtet wird, sondern für die Bearbeitung von Reststoffen einer Vielzahl von Kernkraftwerken ausgelegt und modular angepasst werden kann.

Diese herkömmlichen Anlagen und entsprechenden Verfahren benötigen jeweils ein Areal, welches den Anforderungen für die Bearbeitung von radioaktiv strahlenden Materialien erfüllen muss. Insbesondere die oben erwähnte modulare Anlage erfordert, dass das zu bearbeitende radioaktive Material zu der Anlage zu transportieren ist, um erst dort weiterbearbeitet und im Falle von radioaktiver Belastung gegebenenfalls in belastetes Restmaterial, also Abfallstoff, und wiederverwendbaren Wertstoff getrennt zu werden.

Insgesamt fallen beim Rückbau einer solchen Industrieanlage mehrere 10.000 Tonnen Material an, die mineralisch oder metallisch oder ein Kunststoff sein können.

Es ist beständiges Ziel, dass das Material rückgebauter Anlagen zu einem möglichst großen Anteil einem jeweiligen Wertstoffkreislauf zugeführt und damit wiederverwendet werden kann. Das Lagern oder Entsorgen des Materials in einer Lagerstätte soll aus Kosten- und Umweltschutzgründen möglichst verhindert werden.

Für den Rückbau von einigen Industrieanlagen ergibt sich jedoch das Problem, dass ein Rückbau nur in einer geeigneten Umgebung durchgeführt werden kann, insbesondere dann, wenn rückgebautes Material z. B. chemisch belastet ist oder nuklear strahlt; während des Rückbaus also besondere Schutzvorkehrungen für das Personal sowie für die Umwelt einzuhalten sind. Typischerweise werden derartige Industrieanlagen in transportierbare Stücke zerlegt, welche dann zu einer für die Be- oder Verarbeitung geeigneten Anlage transportiert werden.

Diese Nachteile werden mit einem Verfahren und einer entsprechenden Vorrichtung zum Rückbau einer Industrieanlage gemäß dem unabhängigen Anspruch 1 verringert. Vorteilhafte Weiterbildungen sind in den Unteransprüchen angegeben.

Im Folgenden wird die Erfindung anhand von Figuren beschrieben. Es zeigen
Fig. 1 schematische Ansicht eines horizontalen Schnitts durch eine Industrieanlage;
Fig. 2 Schritte eines Verfahrens zu Errichtung einer Vorrichtung zum Rückbau einer Industrieanlage.

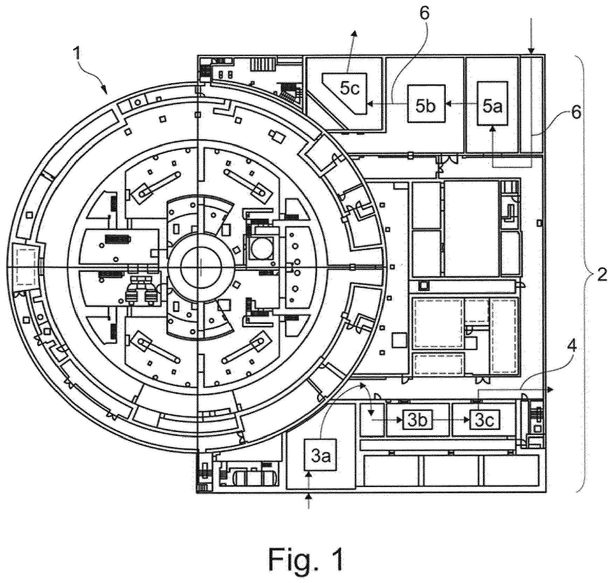

Figur 1 zeigt eine schematische Darstellung eines Grundrisses einer Industrieanlage, hier einer kerntechnischen Anlage, welche rückgebaut werden soll.

Die kerntechnische Anlage 1 umfasst mindestens ein Gebäude 2 und eine Vielzahl an Industrieanlagenelementen, welche in dem Gebäude 2 oder in der unmittelbaren Umgebung platziert sind.

Die Industrieanlagenelemente sind hier insbesondere Elemente der kerntechnischen Anlage 1, welche ab- bzw. rückzubauen sind. Die Industrieanlage, hier die kerntechnische Anlage, beinhaltet dabei verschiedene und an sich bekannte rückzubauende Anlagenelemente. Neben dem Gebäude, welches typischerweise zu einem erheblich Anteil aus Beton oder Stein, also mineralischem Material, besteht, gehören im Wesentlichen zum Betrieb der Anlage notwendige Maschinen (z. B. Pumpen) und verfahrenstechnische Einrichtungen (z. B. Rohrleitungen, Ventile) sowie weitere Bauteile aus unterschiedlichen Stoffen (z. B. elektrische Steuerungen) und je nach Reaktortyp (Siedewasserreaktor) ein Maschinenhaus mit eingebauten Maschinen dazu.

Dementsprechend sind für den Rückbau der verschiedenen Anlagenelemente unterschiedliche Werkzeuge und Maschinen notwendig, um die Anlagenelemente nötigenfalls zunächst am Ort ihres jeweiligen Einbaus zu bearbeiten und diese anschließend aus einer jeweilige Installation herauszulösen, bevor diese für eine weitere Be- oder Verarbeitung zu einer entsprechenden Maschine bzw. einer Reihe von Maschinen transportiert werden können.

Typischerweise werden Elemente der rückzubauenden Anlage nach dem Lösen aus dem Verbund der Anlage nacheinander an verschiedenen Stationen, im nachfolgenden Abbaustationen genannt, be- und verarbeitet. So werden große Elemente, wie beispielsweise Betonwände, in Abschnitte zerteilt, wobei für das Zerteilen entsprechende Werkzeuge, wie beispielsweise Betonfräsen oder Kreissägen oder Kernbohrer, verwendet werden. Anschließend wird ein Abschnitt einer zerteilten Betonwand zu einer weiteren Abbaustation transportiert, beispielsweise zu einem stationären Betonbrecher oder einer Strahlanlage zur weiteren Reinigung. Abgebaute verfahrenstechnische Einrichtungen, wie z. B. Armaturen oder Pumpen, können vor Ort (vor-)zerlegt oder zu geeigneten Abbaustationen zur weiteren Zerlegung transportiert werden. Nachfolgend können sie zur weiteren Zerlegung zu für die Metallbearbeitung geeigneten Abbaustationen transportiert und dort weiter be- und verarbeitet werden, beispielsweise mit einer Bandsäge zur Zerlegung in kleinere Abschnitte.

Der Transport der abgebauten Anlagenelemente wird vorzugsweise mit einheitlichen Behältern durchgeführt, insbesondere mit sogenannten Vollwandboxen in der üblichen standardisierten Größe von herkömmlichen Industriepaletten. Dabei kann ein jeder Behälter mit einer eindeutigen Kennung versehen sein, sodass der Behälter auch während des gesamten Durchlaufs durch die Abbaustationen identifiziert werden kann, wobei vorzugsweise ein elektronisches System zur automatischen Verfolgung eines Behälters eingesetzt werden kann. Für eine solche Kennung eines Behälters kann ein an sich herkömmliches System verwendet werden, beispielsweise mit RFID-Transpondern zur automatisierten Erfassung der Behälter an einer Abbaustation. Alternativ kann halbautomatisiertes System, beispielsweise mit einer Barcode- oder QR-Kennzeichnung eines jeden Behälters verwendet werden.

Insbesondere wird ein Behälter, der einmal für den Transport von Abfallmaterial verwendet wurde, anschließend vorzugsweise nur noch für den Transport von Abfallmaterial verwendet, um eine Kontamination von Wertstoffen durch Rückstände in einem zuvor für Abfallmaterial verwendeten Behälter zu vermeiden. Weiterhin werden die Behälter hinsichtlich ihrer jeweiligen Verschmutzung überwacht, um ein Ansammeln von aktiviertem bzw. kontaminiertem Material zu verhindern. In Abhängigkeit vom Verschmutzungsgrad werden die Behälter einer automatisierten Reinigung zugeführt. Nach Reinigung können die Behälter dann wieder für Abfallmaterial oder für Wertstoffe verwendet werden.

Neben der Zerlegung ist die Reinigung von anhaftender Kontamination (radioaktiv und/oder chemisch) ein wesentlicher Verfahrensschritt. Die ggf. vorzerlegten Anlagenelemente werden entsprechenden Abbaustationen zur Reinigung z. B. durch Wasserstrahlen oder ein anderes abrasives Verfahren zugeführt.

Weiterhin ergibt sich insbesondere beim Rückbau einer kerntechnischen Anlage die Notwendigkeit, den Grad der Strahlungsaktivität zu messen. Liegt die Strahlungsaktivität des rückgebauten Elements unterhalb des zulässigen Grenzwerts, so kann das Material für einen Wertstoffkreislauf freigegeben werden. Anderenfalls, wenn also die sogenannte Freimessung eine über dem Grenzwert liegende Strahlungsaktivität ergeben hat, so gilt das Material als Abfall und muss das jeweils für eine dann notwendige Endlagerung entsprechend vorbereitet bzw. verpackt werden. Dementsprechend können Abbaustationen für das Einfüllen derartiger Rückbauelemente in Behälter und zur Herstellung endlagerfähiger Verpackungen (z. B. Press- oder Trocknungsschritte) vorgesehen sein.

Die Abbaustationen an sich sowie die entsprechenden Verfahren zum Rückbauen und anschließenden Be- und Verarbeiten der rückgebauten Anlagenelemente sind bereits bekannt und können bei der Planung des Rückbaus berücksichtigt werden. Ebenso können die Eigenschaften der rückzubauenden Industrieanlage vor dem Rückbau ermittelt werden oder sind bereits bekannt und können damit während der Planungsphase des Rückbaus zugrunde gelegt werden, sodass ein Verfahren zum Errichten einer Vorrichtung zum Rückbau einer oben beschriebenen Industrieanlage aufgrund der vorliegenden Informationen möglich ist.

Die Planung hat dabei das Ziel, die Vorrichtung zum Rückbau der Industrieanlage in bestehenden Räumen der rückzubauenden Industrieanlage zu errichten, sodass Eigenschaften der Industrieanlage während des Rückbaus genutzt werden können. So können während des Rückbaus Sicherheitseinrichtungen der Industrieanlage bis zu deren jeweiligem Rückbau genutzt werden, welche in einer rückzubauenden kerntechnischen Anlage für den produktiven Betrieb der Anlage ohnehin notwendig waren. Eine Belüftungsanlage, die zum Filtern der Abluft vorgesehen und eingerichtet war, kann damit in vorteilhafter Weise weiterhin verwendet werden, um beispielsweise Staubrückstände, die nicht in die Umwelt entlassen werden dürfen, aus der Abluft auszufiltern.

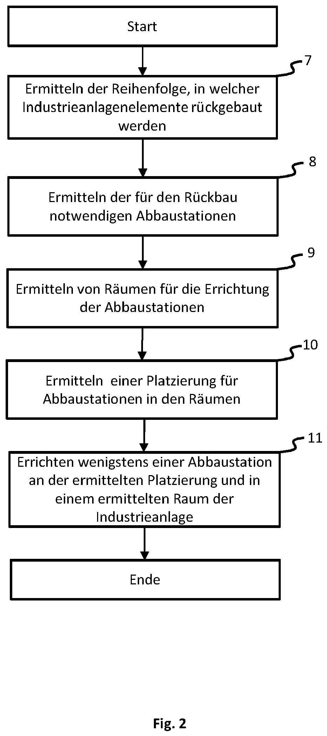

Das Verfahren beginnt, siehe Figur 2 Bezugszeichen 7, mit dem Ermitteln der Reihenfolge, in welcher Anlagenelemente, hier der kerntechnischen Anlage, rückgebaut werden. Hierfür kann zum einen auf allgemeine Grundsätze zurückgegriffen werden, zum anderen kann auf Erfahrungswerte zurückgegriffen werden, die beim Rückbau anderer Industrieanlagen gesammelt wurden. ist es für den Fachmann zum einen offensichtlich, dass Treppen und Aufzüge solange in betriebsfähigem Zustand gehalten und damit nicht rückgebaut werden, bis die Treppe bzw. der Aufzug nicht mehr benötigt wird, um diese während des Rückbaus als Transportwege nutzen zu können. Andererseits können Elemente der Industrieanlage, welche nur für den bestimmungsgemäßen Betrieb der Anlage nicht aber für deren Rückbau notwendig sind, früher abgebaut werden.

Insbesondere kann für die Ermittlung der Reihenfolge, in welcher Anlagenelemente abgebaut bzw. rückgebaut werden, die Platzierung des jeweiligen Anlagenelements berücksichtigt werden mit dem Ziel, dass zunächst Anlagenelemente rückgebaut werden, deren Platz für die Errichtung von Abbaustationen notwendig ist, sodass der durch den Abbau von Anlagenelementen freiwerdende Platz für eine Abbaustation genutzt werden könnte.

Weiterhin kann für die Ermittlung der Abbaureihenfolge in vorteilhafter Weise berücksichtigt werden, welche Abbaustationen für den Rückbau eines Anlagenelements notwendig sind, sodass zunächst Anlagenelemente rückgebaut werden, für deren weitere Be- und Verarbeitung nur diejenigen Abbaustationen benötigt werden, welche zu Beginn des Errichtens der Abbaustationen bereits vorhanden sind. Auf diese Weise kann mit dem Rückbau der kerntechnischen Anlage begonnen werden, ohne dass bereits Abbaustationen errichtet sind, die nur für den Rückbau einer Teilmenge der Anlagenelemente notwendig sind. Auf diese Weise werden zunächst bevorzugt diejenigen Anlagenelemente rückgebaut, für deren Rückbau möglichst wenige Abbaustationen benötigt werden und deren freiwerdender Platz in den Räumen der Anlage für das Errichten weiterer Abbaustationen genutzt wird. Beispielsweise können zunächst Abbaustationen für die mechanische Zerlegung ausgebauter Komponenten sowie für die Reinigung von deren Oberflächen, beispielsweise durch Wasserstrahlen, installiert werden.

Nahezu gleichzeitig mit der Ermittlung der Rückbaureihenfolge wird ermittelt, siehe Nr. 8 in Fig. 2, welche Abbaustationen für den Rückbau benötigt werden und in welcher Reihenfolge diese benötigt werden in Hinblick auf die Reihenfolge der rückzubauenden Anlagenelemente. Die Reihenfolge der rückzubauenden Anlagenelemente sowie die dafür benötigten Abbaustationen sind dabei unter wechselseitiger Berücksichtigung zu ermitteln, sodass in den Räumen der abzubauenden Anlage diejenigen Abbaustationen errichtet und in Betrieb genommen werde können, die zum Rückbau weiterer Anlagenelemente genutzt werden können, der Platz dann idealerweise für den Aufbau weiterer Abbaustationen genutzt werden kann.

Anschließend an die Schritte des Auswählens der Rückbaureihenfolge und der Ermittlung der Abbaustationen sind die Räume zu ermitteln, in denen die Abbaustationen errichtet werden, siehe Nr. 9 in Fig. 2. Dabei sind die Räume, in denen die Abbaustationen errichtet werden, in der rückzubauenden Industrieanlage jedenfalls insoweit vorhanden, dass die ohnehin in der Industrieanlage vorhandenen Räume für die Errichtung der Abbaustationen genutzt werden. Dabei kann ein Raum innerhalb eines Gebäudes einer Industrieanlage auch dadurch geschaffen werden, dass durch Entfernen einer Wand aus zwei benachbart angeordneten Räumen ein entsprechend größerer Raum geschaffen wird. Es sollen keine neuen Gebäude errichtet werden, in denen dann die Vorrichtung zum Rückbau der Industrieanlage errichtet wird, sondern es soll ein Gebäude genutzt werden, welches nicht lediglich für den Rückbau, sondern bereits während des produktiven Betriebs der Anlage für diesen errichtet wurde. Bei der Ermittlung der Räume, in denen die Abbaustationen errichtet werden, wird die Rückbaureihenfolge berücksichtigt, sodass zunächst diejenigen Abbaustationen errichtet werden, welche für den Rückbau der ersten Anlagenelemente benötigt werden.

Weiterhin wird unter Berücksichtigung der ermittelten Rückbaureihenfolge und den ermittelten Abbaustationen und den ermittelten Räumen eine Platzierung für eine jede Abbaustation in einem Raum festgelegt, siehe 10 in Fig. 2. Bei der Auswahl des Platzes für eine Abbaustation in einem Raum werden die Größe der rückgebauten Anlagenelemente berücksichtigt sowie die Größe der Transportvehikel, mit bzw. in denen die rückgebauten Anlagenelemente zur nächsten Abbaustation transportiert werden.

Die oben beschriebenen Schritte zur Festlegung der Rückbaureihenfolge, der benötigten Abbaustationen sowie der Räume, in denen die Abbaustationen errichtet werden und die Platzierung der Abbaustationen in den Räumen wird dabei für den Rückbau und die Bearbeitung von Wertstoffen und für den Rückbau und die Bearbeitung von Abfallstoffen durchgeführt, sodass mittels einer ersten Gruppe von Abbaustationen die wiederverwendbaren Wertstoffe und mittels einer zweiten, separaten Gruppe von Abbaustationen die nicht wieder verwendbaren, sondern final zu entsorgenden Abfallstoffe bearbeitet werden. Die Ver- beziehungsweise Bearbeitung von Wertstoffen einerseits sowie Abfallstoffen andererseits soll dabei strikt getrennt und ausschließlich in einer jeweiligen Gruppe von Abbaustationen durchgeführt werden. Dabei sollen die Wertstoffe ebenso wie die Abfallstoffe an jeder Abbaustation nur jeweils einmal be- oder verarbeitet werden, sodass die Be- oder Verarbeitung der Wert- und ebenso der Abfallstoffe in einer jeweiligen Gruppe von Abbaustationen wie in einer Einbahnstraße durchgeführt wird. Weiterhin werden die Räume sowie die Platzierung einer jeweiligen Abbaustation in einem Raum so aufeinander abgestimmt, dass Transportwege zwischen den Abbaustationen der ersten und der zweiten Gruppe sich nicht kreuzen.

Abfallstoffe werden dementsprechend nur in der jeweiligen dafür vorgesehenen Gruppe von Abbaustationen verarbeitet, nicht aber in Abbaustationen der Wertstoffverarbeitungskette. Auf diese Weise wird verhindert, dass Abfallstoffe, welche radioaktiv belastet sein können und von denen radioaktive Rückstände auf den Maschinen der Abbaustationen zurückbleiben können, die Abbaustationen der Wertstoffverarbeitungskette verschmutzen und damit möglicherweise Wertstoffe verunreinigen, sodass diese nicht mehr einem Wertstoffkreislauf zugeführt werden dürfen. Ebenso werden Verschmutzungen der Wertstoffe auf den Transportwegen durch die strikte Trennung und das Verhindern von Wegekreuzungen verhindert.

Auf diese Weise werden zwei Gruppen von Abbaustationen in den Räumen der rückzubauenden Anlage errichtet. Dabei kann zunächst jeweils eine erste Untergruppe von Abbaustationen errichtet werden, welche dann für die Be- oder Verarbeitung von zumindest eines ersten rückgebauten Anlagenelements verwendet wird, und erst anschließend wird eine jeweilige zweite Untergruppe von Abbaustationen der Gruppe errichtet. Auf diese Weise können in einer ersten Phase einige Abbaustationen errichtet werden und diese werden anschließend zur Be- und Verarbeitung von rückgebauten Anlagenelementen verwendet, bevor weitere Abbaustationen der jeweiligen Gruppe errichtet werden. Auf diese Weise können die zuerst errichteten Abbaustationen zur Be- und Verarbeitung von Anlagenelementen verwendet werden, sodass anschließend weitere Abbaustationen an demjenigen durch den Rückbau gewonnenen Platz errichtet werden können. Der Aufbau von Abbaustationen für Wertstoffe oder für Abfallstoffe sowie der Rückbau entsprechender Anlagenelemente kann so in wechselnden Phasen und so durchgeführt werden, dass zunächst die mindestens notwendigen Abbaustationen errichtet und in Betrieb genommen werden, wobei dabei vorzugsweise Anlagenelemente rückgebaut werden, deren freiwerdender Platz für die Errichtung weiterer Abbaustationen genutzt wird. Auf diese Weise wird eine Teilmenge der Abbaustationen erst nach dem Rückbau eines ersten Industrieanlagenelements errichtet.

Um die günstigste Rückbaureihenfolge in Verbindung mit den nötigen Abbaustationen sowie die Ermittlung von Räumen und zugehörigen Platzierungen der Abbaustationen finden zu können, wobei eine jeweilige Gruppe von Abbaustationen für die Be- und Verarbeitung von Wertstoffen und Abfallstoffen zu ermitteln ist, kann vorzugsweise eine Simulation verwendet werden, welche als Computerprogramm auf einem Computer ausgeführt werden kann. Dabei können vorhandene Information, wie beispielsweise Karten von Gebäuden sowie Darstellungen der Rückzubauenden Anlagenelementen als Datenbasis in die Simulation eingegeben werden. Eine solche Simulation eines Rückbaus erlaubt eine schnelle Optimierung der Rückbaureihenfolge, der dazu notwendigen Abbaustation und einer Reihenfolge für das Errichten der Abbaustationen sowie für die Ermittlung der Räume und Aufstellplätze der Abbaustationen in den Räumen.

Schließlich wird, wenn basierend auf der Rückbaureihenfolge sowie den ermittelten notwendigen Abbaustationen die Räume sowie Platzierungen ermittelt oder festgelegt wurden, wenigstens eine Abbaustation in einem ermittelten ersten Raum und an einem ermittelten Platz errichtet werden, siehe Nr. 11 in Fig. 2.

Weitere Abbaustationen können jedoch insbesondere dann in einem oder mehreren Räumen der Industrieanlage errichtet werden, wenn der dazu nötige Platz bereitgestellt werden kann, beispielsweise wenn der Platz erst durch den Abbau von Anlagenelementen entsteht, sodass dieser Verfahrensschritt, Nr. 11 in Fig. 2, mehrfach und mit zeitlichen Verzögerungen durchgeführt wird.

Die Gruppe von Abbaustationen für Wertstoffe kann in einer Ausführungsform durch eine bauliche Trennung von der Gruppe der Abbaustationen für Abfallstoffe getrennt sein, sodass ein versehentliches Kreuzen der Wege ausgeschlossen ist. Eine solche bauliche Trennung kann in einer Ausführungsform eine durchgehende Wand oder zumindest eine Barriere sein, die den Transport von Abfallstoffen in den Bereich der Wertstoffe verhindert.

Alternativ oder zusätzlich können die Wege von einer Abbaustation zur nächsten durch eine Markierung auf dem Boden verdeutlicht sein.

Figur 1 zeigt eine erste Gruppe von Abbaustationen, die für die Ver- oder Bearbeitung von Rückbauelementen oder -material vorgesehen sind, wobei die Rückbauelemente bzw. das entsprechende Material Wertstoff und damit einer Wiederverwendung zuzuführen sind. Der Stoffstrom für den Wertstoff durch die mehreren Abbaustationen beginnt mit der Anlieferung des Wertstoffs an die Abbaustation 3a. Nach einer Bearbeitung in der ersten Abbaustation 3a wird der Wertstoff zur nächsten Abbaustation 3b transportiert und anschließend weiter über möglicherweise weitere Abbaustationen bis zur letzten Abbaustation 3c. Die Abbaustation 3a kann eine Reinigungsstation sein, die Abbaustation 3b kann zur Zerkleinerung des Wertstoffs vorgesehen sein und die Abbaustation 3c kann eine Station für die Finalisierung der Bearbeitung des Wertstoffs sein, wobei die Finalisierung des Wertstoffs in einer Ausführungsform das Zerkleinern auf eine Größe umfassen kann, die eine direkte Weiterverwendung ermöglicht. Die Transportwege 4 zwischen den Abbaustationen sind als Pfeile dargestellt.

Eine Gruppe von Abbaustationen 5a-c für die Bearbeitung von Abfallstoffen ist in anderen Räumlichkeiten platziert. Die rückgebauten Anlagenelemente werden als Abfallstoffe zunächst in einer ersten Abbaustation 5a bearbeitet und anschließend in weiteren Abbaustationen 5b-5c weiterverarbeitet, wobei der Transport der abgebauten Anlagenelemente, also der Abfallstoffe, durch Pfeile 6 schematisch dargestellt ist. Die in Strom der Abfallstoffverarbeitung letzte Abbaustation 5c kann eine Station zum Einbringen der Abfallstoffe in Behälter sein, beispielsweise in Endlagerfässer oder sogenannte Konrad-Container.

Die dargestellten Gruppen von Abbaustationen für Wertstoffe beziehungsweise für Abfallstoffe können mehr oder weniger Abbaustationen umfassen als in der Figur 1 dargestellt.

### Bezugszeichenliste

1 Industrieanlage, hier kerntechnische Anlage
2 Gebäude
3a - 3c Abbaustation für Abfallstoffe
4 Transportweg zwischen Abbaustationen für Abfallstoffe
5a-5c Abbaustationen für Wertstoffe
6 Transportweg
7-11 Verfahrensschritte

## Patentansprüche

1. Verfahren zum Errichten einer Vorrichtung zum Rückbau einer Industrieanlage, wobei die Industrieanlage eine Vielzahl von Industrieanlagenelementen umfasst und wobei die Vorrichtung eine Vielzahl von Abbaustationen zum Abbauen von Industrieanlagenelementen aufweist, umfassend die Verfahrensschritte
- Ermitteln einer Rückbaureihenfolge der Industrieanlagenelemente und
- Ermitteln von Abbaustationen, die für den Rückbau mindestens des ersten Industrieanlagenelements erforderlich sind, und
- Ermitteln von Räumen innerhalb der abzubauenden Industrieanlage zur Errichtung von Abbaustationen basierend auf der ermittelten Rückbaureihenfolge, und
- Festlegen von Platzierungen in Räumen innerhalb der abzubauenden Industrieanlage für Abbaustationen, wobei eine erste Gruppe von Abbaustationen für die Bearbeitung von wiederverwendbaren Wertstoffen und eine zweite Gruppe von Abbaustationen für die Bearbeitung von Abfallstoffen vorgesehen sind, und
- Platzieren einer ersten Abbaustation zum Abbau der Industrieanlage in einem ermittelten Raum der Industrieanlage,
**dadurch gekennzeichnet, dass** sich Transportwege zwischen Abbaustationen der ersten und der zweiten Gruppe nicht kreuzen.

2. Verfahren nach Anspruch 1, wobei eine Reihenfolge für das Errichten der Abbaustationen festgelegt wird, und wobei mindestens eine Teilmenge der Abbaustationen nach dem Rückbau eines ersten Industrieanlagenelements errichtet wird.

3. Verfahren nach einem der vorstehenden Ansprüche, wobei das Ermitteln der Platzierung für eine Abbaustation mittels einer Computersimulation durchgeführt wird.

4. Verfahren nach einem der vorstehenden Ansprüche, wobei die Vorrichtung mindestens eine Abbaustation zum Reinigen eines abgebauten Industrieelements umfasst.

5. Verfahren nach einem der vorstehenden Ansprüche, wobei ein abgebautes Industrieanlagenelement ausschließlich in einer vordefinierten Abfolge an den Abbaustationen nur einer Gruppe und an jeder Abbaustation nur einmal bearbeitet wird.

6. Verfahren nach einem der vorstehenden Ansprüche, wobei die Abbaustationen der ersten Gruppe baulich getrennt sind von den Abbaustationen der zweiten Gruppe.

7. Verfahren nach einem der vorstehenden Ansprüche, wobei die Vorrichtung eine Einrichtung zur Überwachung der Transportwege zwischen Abbaustationen einer jeweiligen Gruppe von Abbaustationen aufweist.

8. Verfahren nach einem der vorstehenden Ansprüche, wobei für den Transport von Anlagenelementen zwischen den Abbaustationen einheitliche Behälter vorgesehen sind.

9. Verfahren nach einem der vorstehenden Ansprüche, wobei die rückzubauende Industrieanlage eine kerntechnische Anlage ist.

10. Vorrichtung zum Rückbau einer Industrieanlage,
wobei die Industrieanlage eine Vielzahl von Industrieanlagenelementen umfasst und wobei die Vorrichtung eine Vielzahl von Abbaustationen für den Rückbau der Industrieanlagenelemente umfasst,
**dadurch gekennzeichnet, dass**
die Abbaustationen für den Rückbau der Industrieanlage in den Räumen der Industrieanlage errichtet sind und
die Abbaustationen eine erste Gruppe von Abbaustationen für die Bearbeitung von wiederverwertbaren Wertstoffen und eine zweite Gruppe von Abbaustationen für die Bearbeitung von Abfallstoffen umfasst, wobei die Abbaustationen so angeordnet sind, dass sich Transportwege zwischen Abbaustationen der ersten und der zweiten Gruppe nicht kreuzen.

11. Vorrichtung nach Anspruch 10, wobei die Gruppe der Abbaustationen für Wertstoffe und die Gruppe der Abbaustationen für Abfallstoffe durch eine bauliche Trennung separiert sind.

12. Vorrichtung nach Anspruch 10 oder 11, wobei die Industrieanlage eine kerntechnische Anlage ist.

## Claims

1. Method for erecting an apparatus for dismantling an industrial plant, the industrial plant comprising a large number of industrial plant elements and the apparatus having a large number of disassembly stations for disassembling industrial plant elements, comprising the method steps of:
- determining a dismantling sequence of the industrial plant elements and
- determining disassembly stations that are required for dismantling at least the first industrial plant element, and
- determining rooms within the industrial plant to be disassembled for erecting disassembly stations, based on the determined dismantling sequence, and
- identifying placements in rooms within the industrial plant to be disassembled for disassembly stations, with a first group of disassembly stations being provided for processing reusable materials and a second group of disassembly stations being provided for processing waste materials, and
- placing a first disassembly station for disassembling the industrial plant in a determined room of the industrial plant,
**characterized in that** transport routes between disassembly stations of the first and the second group do not cross.

2. Method according to claim 1, wherein a sequence for the erection of the disassembly stations is determined, and wherein at least some of the disassembly stations are erected after the dismantling of a first industrial plant element.

3. Method according to either of the preceding claims, wherein the determination of the placement for a disassembly station is carried out by means of a computer simulation.

4. Method according to any of the preceding claims, wherein the apparatus comprises at least one disassembly station for cleaning a disassembled industrial element.

5. Method according to any of the preceding claims, wherein a disassembled industrial plant element is processed exclusively in a predefined sequence at the disassembly stations of only one group and only once at each disassembly station.

6. Method according to any of the preceding claims, wherein the disassembly stations of the first group are structurally separated from the disassembly stations of the second group.

7. Method according to any of the preceding claims, wherein the apparatus has a device for monitoring the transport routes between disassembly stations of a respective group of disassembly stations.

8. Method according to any of the preceding claims, wherein uniform containers are provided for the transport of plant elements between the disassembly stations.

9. Method according to any of the preceding claims, wherein the industrial plant to be dismantled is a nuclear plant.

10. Apparatus for dismantling an industrial plant,
the industrial plant comprising a large number of industrial plant elements and the apparatus comprising a large number of disassembly stations for dismantling the industrial plant elements,
**characterized in that**
the disassembly stations for the dismantling of the industrial plant have been erected in the rooms of the industrial plant and
the disassembly stations comprise a first group of disassembly stations for processing recyclable materials and a second group of disassembly stations for processing waste materials, the disassembly stations being arranged in such a way that transport routes between disassembly stations of the first and the second group do not cross.

11. Apparatus according to claim 10, wherein the group of disassembly stations for recyclable materials and the group of disassembly stations for waste materials are separated by a structural separation.

12. Apparatus according to either claim 10 or claim 11, wherein the industrial plant is a nuclear plant.

## Revendications

1. Procédé destiné à la construction d'un dispositif destiné au démantèlement d'une installation industrielle, dans lequel l'installation industrielle comprend une pluralité d'éléments d'installation industrielle et dans lequel le dispositif présente une pluralité de postes de démontage destinés au démontage d'éléments d'installation industrielle, comprenant les étapes de procédé
- de détermination d'un ordre de démantèlement des éléments d'installation industrielle et
- de détermination de postes de démontage qui sont nécessaires pour le démantèlement d'au moins le premier élément d'installation industrielle, et
- de détermination d'espaces à l'intérieur de l'installation industrielle à démonter destinés à la construction de postes de démontage sur la base de l'ordre de démantèlement déterminé, et
- de définition d'emplacements dans des espaces à l'intérieur de l'installation industrielle à démonter pour des postes de démontage, un premier groupe de postes de démontage étant prévu pour le traitement de matériaux recyclables réutilisables et un second groupe de postes de démontage étant prévu pour le traitement de déchets, et
- de mise en place d'un premier poste de démontage destiné au démontage de l'installation industrielle dans un espace déterminé de l'installation industrielle,
**caractérisé en ce que**
des voies de transport entre des postes de démontage du premier et du second groupe ne se croisent pas.

2. Procédé selon la revendication 1, dans lequel un ordre pour la construction des postes de démontage est défini, et dans lequel au moins une partie des postes de démontage est construite après le démantèlement d'un premier élément d'installation industrielle.

3. Procédé selon l'une des revendications précédentes, dans lequel la détermination de l'emplacement pour un poste de démontage est effectuée au moyen d'une simulation informatique.

4. Procédé selon l'une des revendications précédentes, dans lequel le dispositif comprend au moins un poste de démontage destiné au nettoyage d'un élément industriel démonté.

5. Procédé selon l'une des revendications précédentes, dans lequel un élément d'installation industrielle démonté est traité exclusivement selon un ordre prédéfini au niveau des postes de démontage d'un seul groupe et une seule fois à chaque poste de démontage.

6. Procédé selon l'une des revendications précédentes, dans lequel les postes de démontage du premier groupe sont séparés structurellement des postes de démontage du second groupe.

7. Procédé selon l'une des revendications précédentes, dans lequel le dispositif présente un appareil destiné à la surveillance des voies de transport entre des postes de démontage d'un groupe respectif de postes de démontage.

8. Procédé selon l'une des revendications précédentes, dans lequel des conteneurs unitaires sont prévus pour le transport d'éléments d'installation entre les postes de démontage.

9. Procédé selon l'une des revendications précédentes, dans lequel l'installation industrielle à démanteler est une installation nucléaire.

10. Dispositif destiné au démantèlement d'une installation industrielle,
dans lequel l'installation industrielle comprend une pluralité d'éléments d'installation industrielle et dans lequel le dispositif comprend une pluralité de postes de démontage pour le démantèlement des éléments d'installation industrielle,
**caractérisé en ce que**
les postes de démontage pour le démantèlement de l'installation industrielle sont construits dans les espaces de l'installation industrielle et
les postes de démontage comprennent un premier groupe de postes de démontage pour le traitement de matériaux recyclables réutilisables et un second groupe de postes de démontage pour le traitement de déchets, les postes de démontage étant disposés de telle sorte que des voies de transport entre des postes de démontage du premier et du second groupe ne se croisent pas.

11. Dispositif selon la revendication 10, dans lequel le groupe des postes de démontage pour des matériaux recyclables et le groupe des postes de démontage pour des déchets sont séparés par une séparation structurelle.

12. Dispositif selon la revendication 10 ou 11, dans lequel l'installation industrielle est une installation nucléaire.
